# EUROPÄISCHE PATENTSCHRIFT

(11) **EP 0 865 721 B1**
(45) Veröffentlichungstag und Bekanntmachung des Hinweises auf die Patenterteilung: **26.01.2005**
(21) Anmeldenummer: 97122006.6
(22) Anmeldetag: 13.12.1997
(51) Int. Cl.: A01F 15/07, A01F 15/12

(54) **Rollballenpresse für landwirtschaftliches Erntegut**
Rotobaler for agricultural crop
Presse à balles rondes pour produits agricoles

(30) Priorität: 18.03.1997 DE 19711164
(43) Veröffentlichungstag der Anmeldung: 23.09.1998
(73) Patentinhaber: CLAAS KGaA, 33428 Harsewinkel (DE)
(72) Erfinder: Niemerg, Heinz, 33428 Harsewinkel (DE); Wiefel, Markus, 48361 Beelen (DE)

(56) Entgegenhaltungen:
- EP-A- 0 252 485
- US-A- 4 569 439
- US-A- 4 956 959
- US-A- 5 090 182
- US-A- 5 181 368

## Beschreibung

Die Erfindung betrifft eine Rollballenpresse für landwirtschaftliches Erntegut mit den eigentlichen Preßraum umfangsseitig begrenzenden Wickelelementen, die einen Einlaß für die Zufuhr von einer Mantelbahn zur Formfixierung eines fertigen Ballens freilassen, wobei die Mantelbahn zu einer Rolle aufgewickelt ist, die in einer, außerhalb des eigentlichen Preßraumes mit der Rollballenpresse verbundenen Abrollstation gelagert ist. Derartige Abrollstationen sind bekannt als schalenförmige, offene Gehäuse, aus denen die Mantelbahnen des Umhüllmaterials von einer frei eingelegten Rolle abgezogen werden oder als Einrichtungen, bei der die Rollen des Unxhüllmaterials in einer Vorrichtung an ihren Enden drehbar gehalten werden.

Das fachgerechte Einlegen der Bahnrollen erfolgt in allen Fällen von Hand, wobei die Maschine über Auftritte bestiegen werden muß. Je nach Lage der Abrollstation an der Presse ist der hierzu vom Fahrer aufzubringende Kraftaufwand erheblich, da Mantelbahnrollen ca. 40 kg schwer sind. Um derartige umständliche und kraftaufwendige Arbeiten zu vermeiden, die zudem mit einem erhöhten Unfallrisiko verbunden sind, wird erfindungsgemäß vorgeschlagen, der Abrollstation im Bereich einer Pressenwand eine Ladeeinrichtung zur Aufnahme einer Materialrolle und zur Übergabe derselben der Abrollstation zuzuordnen. In einer bevorzugten Ausgestaltung ist die Ladeeinrichtung von einer verriegelbaren Ruheposition in eine übergabeposition schwenkbar.

Weitere vorteilhafte Ausführungsformen der Erfindung sind in den Unteransprüchen näher definiert.

Im folgenden soll die Erfindung anhand eines Ausführungsbeispieles und mehrerer dieses schematisch darstellender Figuren näher erläutert werden. Dabei zeigt:
- Figur 1: den vorderen Teil einer Ballenpresse in der Seitenansicht, teilweise im Schnitt,
- Figur 2: die in Figur 1 dargestellte Presse in der Vorderansicht,
- Figur 3: einen Teil der in Figur 2 dargestellten Ballenpresse in abgeänderter und vergrößerter Ausführungsform und
- Figur 4: den in Figur 3 mit gestrichelten Linien dargestellten Teil vergrößert und um 90° verdreht.

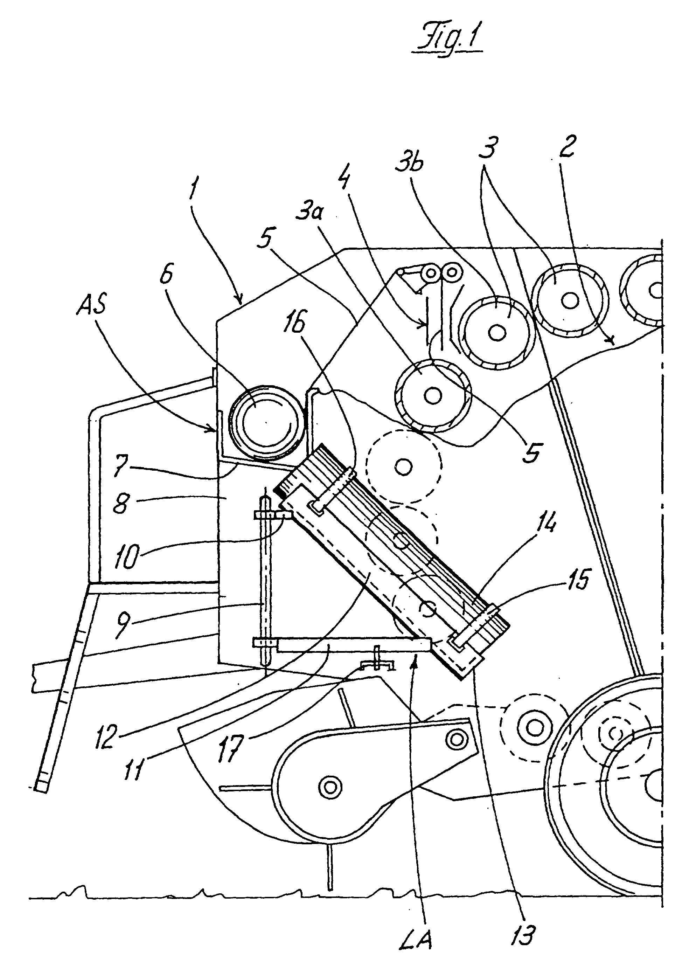

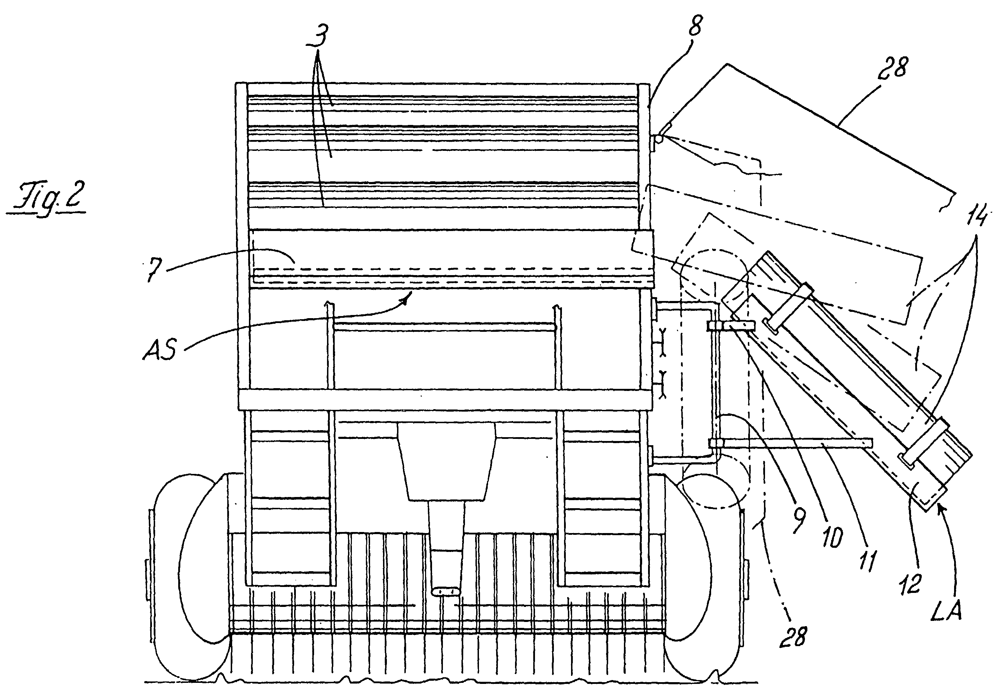

Mit 1 ist der vordere Teil einer an sich bekannten Rollballenpresse bezeichnet, deren eigentlicher Preßraum 2 umfangsseitig von angetriebenen und gegebenenfalls obertlächenstrukturierten Wickelwalzen 3 begrenzt ist. Anstelle von Walzen können auch Riemen oder eine Kombination von Riemen und Walzen den Preßraum 2 umgrenzen. Oberhalb der Wickelwalzen 3a und 3b, die einen Einlaßspalt bilden, ist eine Führung 4 vorgesehen, durch welche eine Mantelbahn 5 durch den Einlaßspalt in den Preßraum 2 eingeführt werden kann, um einen fertig gewickelten Rollballen formfixierend zu umschließen. Die Mantelbahn 5 wird in einer Abrollstation AS von einer Vorratsrolle 6 abgezogen, die beispielsweise in einem Gehäuse 7 gelagert ist und zwar derart, daß ihre Rotationsachse parallel zur Rotationsachse des Preßraumes 2 verläuft. Mit der Seitenwand 8 der Presse 1 ist eine vertikal verlaufende Achse 9 fest verbunden, um die ein oberer Arm 10 und ein unterer Arm 11 drehbar gelagert sind. Wie aus Figur 1 zu erkennen, ist der obere Arm 10 wesentlich kürzer, als der untere Arm 11, so daß die mit ihr fest verbundene Rinne 12 eine zur Horizontalen geneigt verlaufende Lage einnimmt. Die Rinne 12 ist an ihrem unteren Ende durch eine Wand 13 geschlossen, an der sich eine in der Rinne 12 abgelegte Mantelbahnrolle 14 abstützt, die im dargestellten Beispiel (Figur 1) als weitere Vorratsrolle zur Rolle 6 mitgeführt werden kann. Letztere wird durch Bandagen 15 und 16 fixiert. In der in Figur 1 dargestellten Lage ist der untere Arm 11 über einen Feststeller 17 in der Ruheposition fixiert. Sobald die Rolle 6 aufgebraucht ist, wird der Feststeller 17 gelöst und die Rinne 12 aus der in Figur 1 dargestellten Lage in die in Figur 2 dargestellte Lage verschwenkt. In dieser Lage kann die Rinne ebenfalls auf nicht dargestellte Art und Weise verriegelt werden.

Nach Lösen der Bandagen 15 und 16 ist es dann dem Fahrer sehr leicht möglich, die Ersatzrolle 14 in das Gehäuse 7 einzuschieben.

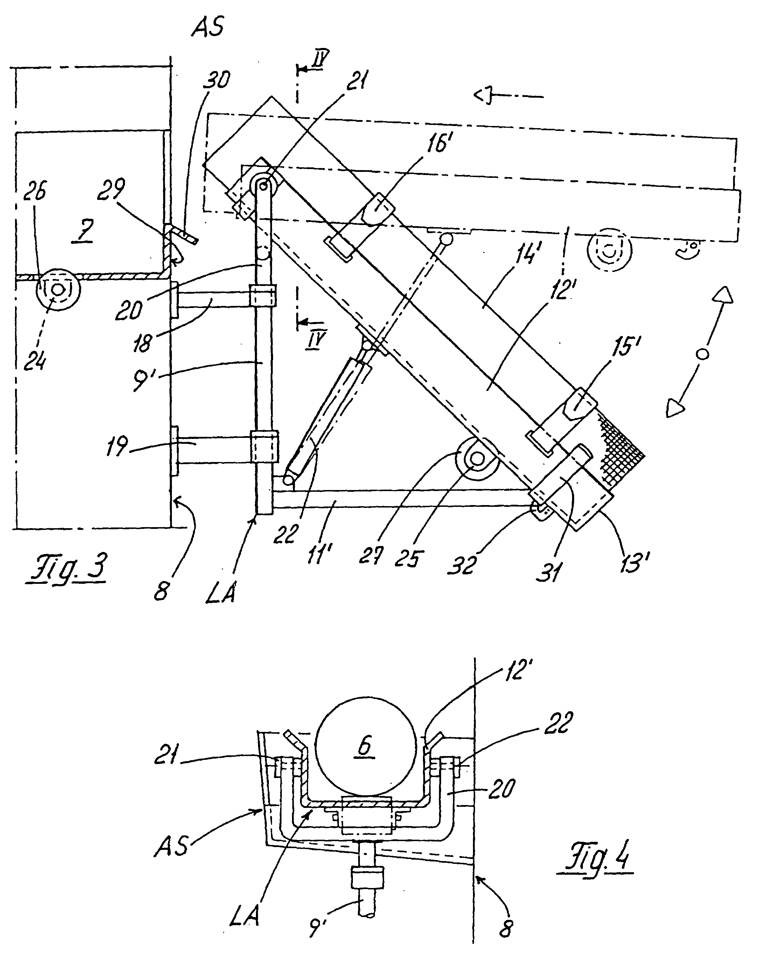

Eine noch bedienerfreundlichere Ausführungsform ist in den Figuren 3 und 4 dargestellt. In diesem Fall ist die Achse 9' drehbar in mit der Seitenwand 8 fest verbundenen Stützen 18 und 19 gelagert, wobei mit der Achse 9' im unteren Bereich der Arm 11' fest verbunden ist. Mit dem der Achse 9' entfernten Ende des Armes 11' ist eine Auflage 31 angeordnet, auf die sich eine Rinne 12' abstützt. Diese Rinne ist in ihrer Lage mittels Feststeller 32 mit der Auflage 31 koppelbar. An ihrem unteren Ende weist die Rinne ebenfalls eine Stützwand 13' auf Das andere Ende der Rinne 12' wird von einer Gabel 20 umgriffen, deren frei auslaufende Schenkel über Achsbolzen 21 und 22 mit der Rinne 12' verbunden sind. Die Gabel 20 selbst ist fest mit dem oberen Endbereich der Achse 9' verbunden. Um die Rinne 12' aus der mit vollen Linien dargestellten Lage in die mit strichpunktierten Linien dargestellte zu verschwenken, ist eine Kolbenzylindereinheit 23 vorgesehen, deren Zylinder mit der Achse 9' und deren Kolbenstange mit der Rinne 12' verbunden ist. Wie im Falle der Ausführungsform nach Figur 1 wird auch hier die Ersatzrolle 14' von Bandagen 15' und 16' während des Transportes und während des Einsatzes auf dem Feld gehalten.

Um die Übergabe der Ersatzrolle 14' aus der Rinne 12' in deren angehobener Position in das Gehäuse 7' zu erleichtern, sind von außen her mit dem Rinnenboden und dem Gehäuseboden Konsolen 24 und 25 verschweißt, in denen Rollen 26 und 27 drehbar gelagert sind. Diese Rollen 26 und 27 greifen durch im Boden des Gehäuses 7' und im Boden der Rinne 12' vorgesehene Schlitze soweit hindurch, daß die Ersatzrolle 14' auf den Rollen aufruht. Während der Übergabe von der Rinne 12' in das Gehäuse 7' rollt demzufolge die Ersatzrolle 14' auf den Rollen 26 bzw. 27 ab, von denen der Einfachheit halber jeweils nur eine dargestellt ist.

Um zu vermeiden, daß die Ersatzrolle 14' während der Übergabe vor die Gehäusewand 29 stößt, ist diese mit einer Leitfläche 30 versehen.

Selbstverständlich kann auch die Rinne 14' ebenso wie die Rinne 14 um 90° verschwenkt werden, so daß sie seitlich an der Ballenpresse 1 anliegt. Im angeklappten Zustand - also in der Ruheposition - werden die Rinnen von einer Schutzklappe 28 (Fig. 2) abgedeckt.

Die erfindungsgemäße Rinne ist nicht nur zur Aufgabe und Speicherung einer Ersatzrolle vorgesehen, sie kann vielmehr auch mehrere Rollen von Wickelgarn aufnehmen, falls ein fertiger Ballen anstatt mit einer Mantelbahn mit Bindegarn formfixiert werden soll. Es ist sogar denkbar, daß ein Garnstrang direkt aus einer in der Rinne befindlichen Wickelgarnrolle abgezogen wird und dann über entsprechende Führungen in den Ballenpreßraum gelangt.

Im Ausfiihrungsbeispiel ist eine Befestigung der Ladeeinrichtung LA im Bereich einer Presseseitenwand 8 gezeigt. Dem Fachmann bereitet es jedoch keine Schwierigkeiten, den Erfindungsgegenstand so abzuwandeln, daß die Ladeeinrichtung LA auch an einer Stirn- oder Rückwand einer Rollballenpresse erfindungsgemäß funktionstüchtig befestigbar ist.

### Bezugszeichenliste

- 1 -: Vorderer Teil
- 2 -: Preßraum
- 3 -: Wickelwalzen
- 3a -: Wickelwalzen
- 3b -: Wickelwalzen
- 4 -: Führungen
- 5 -: Materialbahn
- 6 -: Vorratsrolle
- 7 -: Abrollstation, Gehäuse
- 8 -: Seitenwand
- 9 -: Achse
- 9' -: Achse
- 10 -: oberer Arm
- 11 -: unterer Arm
- 11' -: unterer Arm
- 12 -: Rinne
- 12' -: Rinne
- 13 -: Wand
- 13' -: Wand
- 14 -: Mantelbahnrolle
- 14' -: Mantelbahnrolle
- 15 -: Bandagen
- 15' -: Bandagen
- 16 -: Bandagen
- 16' -: Bandage
- 17 -: Feststeller
- 18 -: Stützen
- 19 -: Stützen
- 20 -: Gabel
- 21 -: Achsbolzen
- 22 -: Achsbolzen
- 23 -: Kolbenzylindereinheit
- 24 -: Konsolen
- 25 -: Konsolen
- 26 -: Rollen
- 27 -: Rollen
- 28 -: Schutzklappe
- 29 -: Gehäusewand
- 30 -: Leitfläche
- 31 -: Auflage
- 32 -: Feststeller
- AS -: Abrollstation
- LA -: Ladeeinrichtung

## Patentansprüche

1. Rollballenpresse für landwirtschaftliches Erntegut mit den eigentlichen Pressraum umfangsseitig begrenzenden Wickelelemente, die einen Einlass für die Zufuhr von einer Mantelbahn zur Formfixierung eines fertigen Ballens freilassen, wobei die Mantelbahn zu einer Rolle aufgewickelt ist, die in einer, außerhalb des eigentlichen Pressraumes mit der Rollballenpresse verbundenen Abrollstation gelagert ist,
**dadurch gekennzeichnet,**
**dass** der Abrollstation (AS, 7, 7') im Bereich einer Pressenwand (8) eine Ladeeinrichtung (LA) zur Aufnahme einer Bahnrolle (14, 14') und zur Übergabe der Bahnrolle an die Abrollstation (AS, 7, 7') zugeordnet ist und wobei die Ladeeinrichtung (LA) von einer verriegelbaren Ruheposition in eine Übergabeposition schwenkbar ist.

2. Rollballenpresse nach Anspruch 1,
**dadurch gekennzeichnet,**
**daß** die Ladeeinrichtung (LA) um eine vertikale Achse (9, 9') schwenkbar ist.

3. Rollballenpresse nach Ansprüch 1 oder 2,
**dadurch gekennzeichnet,**
**daß** die Ladeeinrichtung (LA) um eine horizontale Achse (21, 22) schwenkbar ist.

4. Rollballenpresse nach einem oder mehreren der Ansprüche 1 bis 3,
**dadurch gekennzeichnet,**
**daß** die Ladeeinrichtung (LA) in ihrer Ruheposition zur Horizontalen geneigt verläuft.

5. Rollballenpresse nach einem oder mehreren der Ansprüche 1 bis 4,
**dadurch gekennzeichnet,**
**daß** die Ladeeinrichtung (LA) als Rinne (12, 12') ausgebildet ist, die an ihrem einen Ende eine Anlage (13, 13') für eine Stirnseite der Bahnrolle (14, 14') aufweist.

6. Rollballenpresse nach einem oder mehreren der Ansprüche 1 bis 5,
**dadurch gekennzeichnet,**
**daß** die Rinne (12) über einen oberen und einen unteren Arm (10, 11) drehbar an einer vertikalen mit der Pressenwand (8) verbundenen Achse (9) schwenkbar ist, wobei der untere Arm (11) der längere ist und mittels eines Feststellers (17) in Ruheposition arretierbar ist.

7. Rollballenpresse nach einem oder mehreren der Ansprüche 1 bis 6,
**dadurch gekennzeichnet,**
**daß** der Rinne (12, 12') zumindest eine eine Bahnrolle (14, 14') fixierende Bandage (15, 16 bzw. 15', 16') zugeordnet ist.

8. Rollballenpresse nach einem oder mehreren der Ansprüche 1 bis 7,
**dadurch gekennzeichnet,**
**daß** die Rinne (12, 12') in Ruheposition von einer klappbaren Seitenschutzverkleidung (30) abgedeckt ist.

9. Rollballenpresse nach einem oder mehreren der Ansprüche 1 bis 8,
**dadurch gekennzeichnet,**
**daß** die Rinne (12') in ihrem oberen Bereich schwenkbar in einer Gabel (20) gehalten ist.

10. Rollballenpresse nach Anspruch 9,
**dadurch gekennzeichnet,**
**daß** die Rinne (12') in ihrem unteren Bereich in einer Auflage (31) abgestützt ist.

11. Rollballenpresse nach den Ansprüchen 9 oder 10,
**dadurch gekennzeichnet,**
**daß** an der Rinne (12') eine Kolbenzylindereinheit (22) zum Schwenken derselben aus der zur Horizontalen geneigten Ruheposition in die etwa horizontale Übergabeposition für die Bahnrolle (14') angreift

12. Rollballenpresse nach einem der Ansprüche 9 bis 11,
**dadurch gekennzeichnet,**
**daß** die Auflage (31) gabelförmig ausgebildet und über einen Arm (11') an einer senkrecht verlaufenden Achse (9') befestigt ist.

13. Rollballenpresse nach einem oder mehreren der Ansprüche 1 bis 12,
**dadurch gekennzeichnet,**
**daß** sowohl der Boden des Gehäuses (7') als auch der Boden der Rinne (12') zumindest eine Durchbrechung aufweist, durch die zumindest je eine Stützrolle (26, 27) mit quer zur Längsachse der Rinne (12') verlaufender Drehachse bereichsweise hindurchgreift.

## Claims

1. A round bale press for agricultural crop material comprising winding elements which delimit the actual pressing chamber at the periphery thereof and which leave free an inlet for the feed of a wrapping web for fixing the shape of a finished bale, wherein the wrapping web is wound up to form a roll which is mounted in an unrolling station connected outside the actual pressing chamber to the round bale press, **characterised in that** associated with the unrolling station (AS, 7, 7') in the region of a press wall (8) is a loading device (LA) for receiving a web roll (14, 14') and for transferring the web roll to the unrolling station (AS, 7, 7'), and wherein the loading device (LA) is pivotable from a lockable rest position into a transfer position.

2. A round bale press according to claim 1 **characterised in that** the loading device (LA) is pivotable about a vertical axis (9, 9').

3. A round bale press according to claim 1 or claim 2 **characterised in that** the loading device (LA) is pivotable about a horizontal axis (21, 22).

4. A round bale press according to one or more of claims 1 to 3 **characterised in that** the loading device (LA) extends inclinedly relative to the horizontal in its rest position.

5. A round bale press according to one or more of claims 1 to 4 **characterised in that** the loading device (LA) is in the form of a channel (12, 12') which at its one end has a support (13, 13') for an end of the web roll (14, 14').

6. A round bale press according to one or more of claims 1 to 5 **characterised in that** the channel (12) is pivotable by way of an upper and a lower arm (10, 11) rotatably on a vertical spindle (9) connected to the press wall (8), wherein the lower arm (11) is the longer arm and can be arrested in the rest position by a fixing device (17).

7. A round bale press according to one or more of claims 1 to 6 **characterised in that** associated with the channel (12, 12') is at least one band (15, 16 and 15', 16' respectively) for fixing a web roll (14, 14').

8. A round bale press according to one or more of claims 1 to 7 **characterised in that** in the rest position the channel (12, 12') is covered by a pivotable side protection cladding (30).

9. A round bale press according to one or more of claims I to 8 **characterised in that** the channel (12') is held in its upper region pivotably in a fork (20).

10. A round bale press according to claim 9 **characterised in that** the channel (12') is supported in its lower region in a support member (31).

11. A round bale press according to claim 9 or claim 10 **characterised in that** the channel (12') is engaged by a piston cylinder unit (22) for pivotal movement thereof from the rest position of being inclined relative to the horizontal into the approximately horizontal transfer position for the web roll (14').

12. A round bale press according to one of claims 9 to 11 **characterised in that** the support member (31) is of a forked configuration and is fixed by way of an arm (11') to a vertically extending spindle (9').

13. A round bale press according to one or more of claims 1 to 12 **characterised in that** both the bottom of the housing (7') and also the bottom of the channel (12') has at least one opening through which at least one respective support roller (26, 27) engages in a region-wise manner, with an axis of rotation extending transversely with respect to the longitudinal axis of the channel (12').

## Revendications

1. Presse à balles rondes pour produit de récolte agricole, avec des éléments enrouleurs qui délimitent extérieurement la chambre de compression proprement dite et laissent libre une entrée pour l'alimentation d'une bande-enveloppe servant à fixer la forme d'une balle terminée, la bande-enveloppe étant enroulée en un rouleau logé dans un poste de dévidage qui est situé à l'extérieur de la chambre de compression et est lié à la presse à balles rondes, **caractérisée par le fait qu'**au poste de dévidage (AS, 7, 7') est associé, dans le voisinage d'une paroi (8) de la presse, un dispositif de chargement (LA) pour recevoir un rouleau de bande (14, 14') et transférer le rouleau de bande dans le poste de dévidage (AS, 7, 7'), le dispositif de chargement (LA) pouvant pivoter d'une position de repos verrouillable dans une position de transfert.

2. Presse à balles rondes selon la revendication 1, **caractérisée par le fait que** le dispositif de chargement (LA) peut pivoter autour d'un axe (9, 9') vertical.

3. Presse à balles rondes selon la revendication 1 ou 2, **caractérisée par le fait que** le dispositif de chargement (LA) peut pivoter autour d'un axe (21, 22) horizontal.

4. Presse à balles rondes selon une ou plusieurs des revendications 1 à 3, **caractérisée par le fait que** le dispositif de chargement (LA), dans sa position de repos, est incliné par rapport à l'horizontale.

5. Presse à balles rondes selon une ou plusieurs des revendications 1 à 4, **caractérisée par le fait que** le dispositif de chargement (LA) est conformé en gouttière (12, 12'), qui présente à l'une de ses extrémités une butée (13, 13') pour une face frontale du rouleau de bande (14, 14')

6. Presse à balles rondes selon une ou plusieurs des revendications 1 à 5, **caractérisée par le fait que** la gouttière (12) peut pivoter grâce à un bras supérieur et un bras inférieur (10, 11) qui sont liés à un axe (9) vertical monté tournant sur la paroi de presse (8), le bras inférieur (11) étant le plus long et pouvant être bloqué dans la position de repos à l'aide d'un moyen d'arrêt (17).

7. Presse à balles rondes selon une ou plusieurs des revendications 1 à 6, **caractérisée par le fait qu'**au moins une sangle (15, 16 ou 15', 16') qui retient un rouleau de bande (14, 14') est associée à la gouttière (12, 12').

8. Presse à balles rondes selon une ou plusieurs des revendications 1 à 7, **caractérisée par le fait que** la gouttière (12, 12'), en position de repos, est maquée par un habillage de protection latéral (30) rabattable.

9. Presse à balles rondes selon une ou plusieurs des revendications 1 à 8, **caractérisée par le fait que** la gouttière (12, 12') dans sa partie supérieure est montée pivotante dans une fourche (20).

10. Presse à balles rondes selon la revendication 9, **caractérisée par le fait que** la gouttière (12') dans sa partie inférieure repose dans un support (31)

11. Presse à balles rondes selon la revendication 9 ou 10, **caractérisée par le fait qu'**un vérin à piston (22) agit sur la gouttière (12') aux fins d'amener celle-ci par pivotement de la position de repos inclinée par rapport à l'horizontale dans la position de transfert du rouleau de bande (14') sensiblement horizontale.

12. Presse à balles rondes selon une des revendications 9 à 11, **caractérisée par le fait que** le support (31) est conformé en fourche et est fixé à un axe (9') vertical par l'intermédiaire d'un bras (11').

13. Presse à balles rondes selon une des revendications 1 à 12, **caractérisée par le fait qu'**aussi bien le fond du carter (7') que le fond de la gouttière (12') présentent au moins une ouverture au travers de laquelle fait saillie chaque fois au moins un galet de support (26, 27), dont l'axe de rotation est orienté transversalement à l'axe longitudinal de la gouttière (12').
